Europäisches Patentamt

European Patent Office

Office européen des brevets

(19)

(11) Publication number: **0 475 197 A2**

# EUROPEAN PATENT APPLICATION

(12)

(21) Application number: **91114466.5**

(22) Date of filing: **28.08.91**

(51) Int. Cl.5: **G11B 7/24**

(30) Priority: **28.08.90 JP 224414/90**

(43) Date of publication of application:
**18.03.92 Bulletin 92/12**

(84) Designated Contracting States:
**DE FR GB NL**

(71) Applicant: **Kabushiki Kaisha Toshiba**
**72, Horikawa-cho Saiwai-ku**
**Kawasaki-shi(JP)**

(72) Inventor: **Kasahara, Akihiro, c/o Intellectual**
**Property Div.**
**KABUSHIKI KAISHA TOSHIBA, 1-1 Shibaura**
**1-chome**
**Minato-ku, Tokyo 105(JP)**

(74) Representative: **Blumbach Weser Bergen**
**Kramer Zwirner Hoffmann Patentanwälte**
**Radeckestrasse 43**
**W-8000 München 60(DE)**

(54) **Information recording medium.**

(57) An optical disk includes a pair of disk-shaped substrates (52) and a pair of hubs (53). Each substrate has a recording region (50) for recording information and a center bore (52a). Each hub has a cylindrical body and collar portions (57) projecting radially from the outer circumference of the body. The hub is fixed to the corresponding substrate in such manner that the cylindrical body is fitted in the center bore and the collar portions are adhered to a surface of the substrate. The substrates fitted with the hubs are pasted together facing each other so that the collar portions are clamped between the substrates.

FIG. 1

The present invention relates to an information recording medium, such as an optical disk, for optically recording and reproducing information.

In general, an information recording medium, e.g., an optical disk for double-sided recording and reproducing is formed by joining two substrates, each having an information recording and reproducing region, and pasting a hub, for use as a supported body, on the out side of each substrate. The optical disk is rotated in a manner such that its hub is supported on a turntable as supporting means which is arranged in an optical disk apparatus, for example.

In the optical disk constructed in this manner, the hub sometimes may be separated from the substrate due to defective bonding. In such a case, only the hub is left in the disk apparatus, and fails to be removed therefrom. In this state, a user cannot repair the disk apparatus.

The present invention has been contrived in consideration of these circumstances, and its object is to provide a safe information recording medium which has no possibility of damaging a recording and reproducing apparatus due to its hub's separation.

In order to solve the above problem, an information recording medium according to the present invention, which is supported by means of supporting means for rotation and is designed to record or reproduce information when irradiated, comprises: two substrates each having a recording region on which information is recorded and pasted together facing each other; and an engagement portion for engaging the supporting means, the engagement portion including a projection clamped between the substrates.

With this arrangement, even if the engagement portion, which constitutes the supported body, is separated from the substrates due to defective bonding, its projection, held between the substrates, prevents the engagement portion from being disengaged from the substrates. According to the information recording medium of the present invention, therefore, there is no possibility of only the engagement portion remaining in the supporting means in the disk apparatus and failing to be removed therefrom in case of a user's repairing the apparatus.

This invention can be more fully understood from the following detailed description when taken in conjunction with the accompanying drawings, in which:

Figs. 1 to 3 show an optical disk according to an embodiment of the present invention, in which:

Fig. 1 is a sectional view of the optical disk,

Fig. 2 is a perspective view showing hubs of the optical disk, and

Fig. 3 is a sectional view of one of the hubs;

Figs. 4 to 8 show a disk cartridge containing the optical disk, in which:

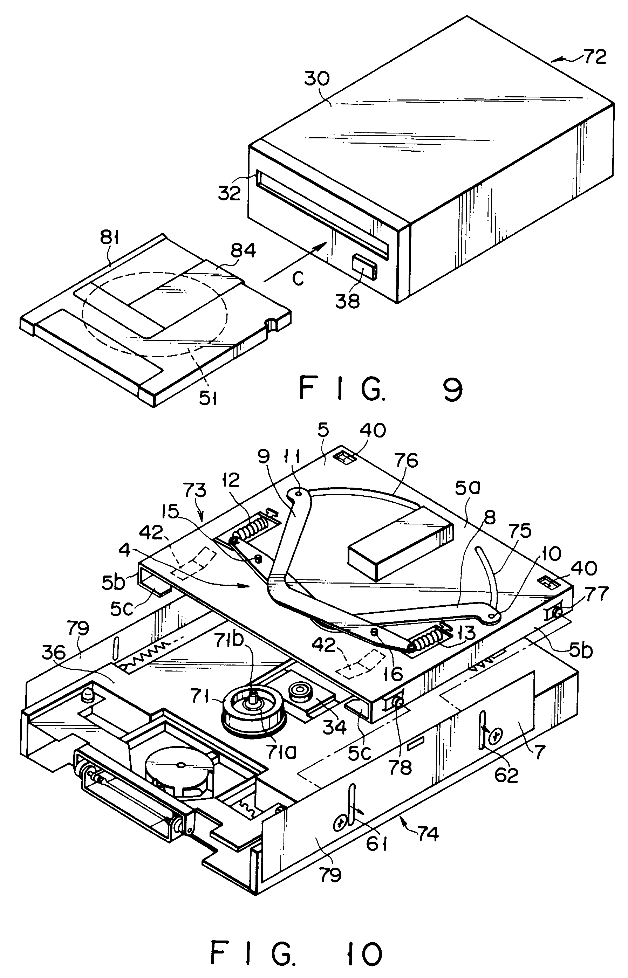

Fig. 4 is a perspective view of the cartridge,

Fig. 5 is a perspective view showing a slider of the cartridge,

Fig. 6 is a plan view of the cartridge,

Fig. 7 is an enlarged perspective view showing a taper portion of the slider and a taper portion of a shutter, and

Fig. 8 is a side view showing the taper portions; and

Figs. 9 to 18 show an optical disk apparatus used with the disk cartridge, in which:

Fig. 9 is a perspective view showing an outline of the apparatus along with the cartridge,

Fig. 10 is a perspective view showing the interior of the apparatus with its housing omitted,

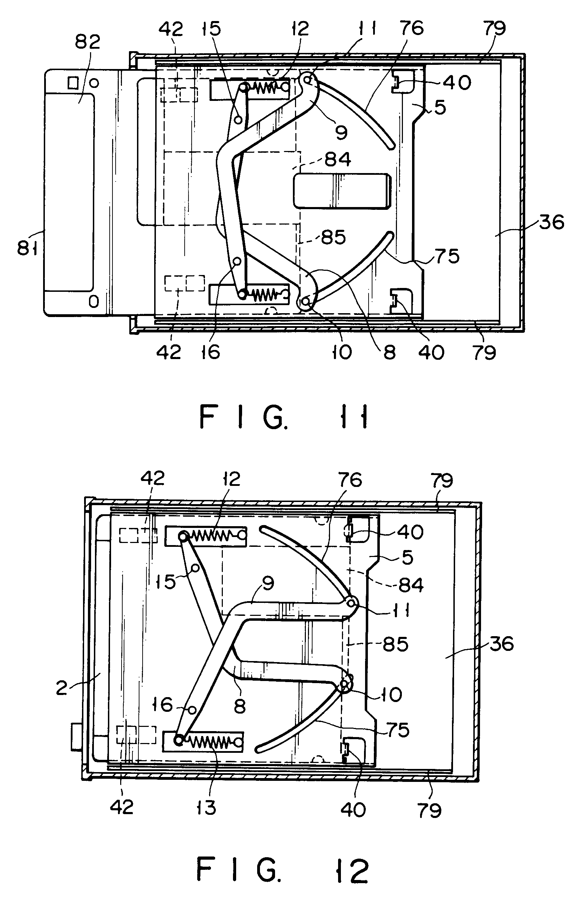

Fig. 11 is a plan view schematically showing a state in which the cartridge is in its initial position in the apparatus,

Fig. 12 is a plan view schematically showing a state in which the whole cartridge is held in the apparatus,

Fig. 13 is a perspective view showing a holder frame holding the whole cartridge,

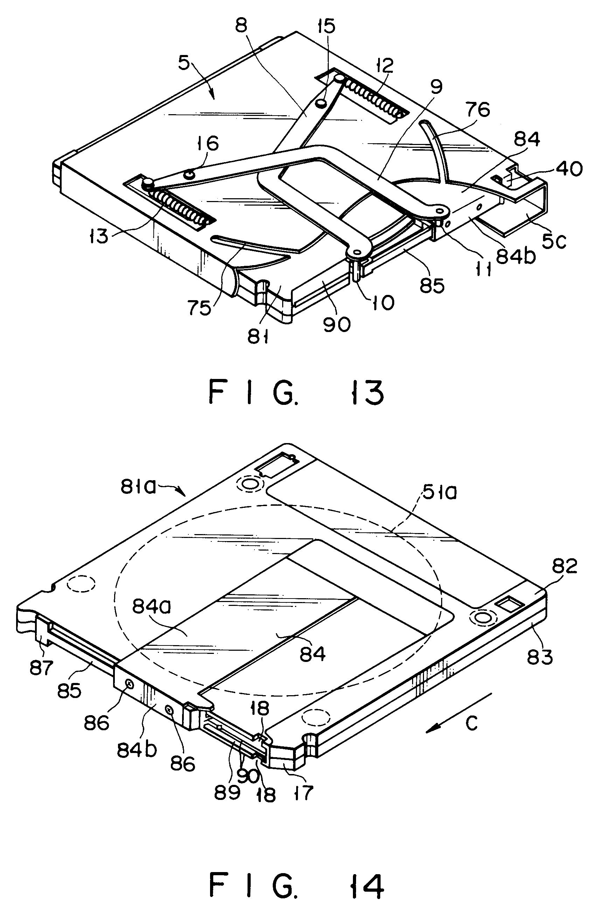

Fig. 14 is a perspective view showing a cartridge of an optical disk for single-sided recording and reproducing,

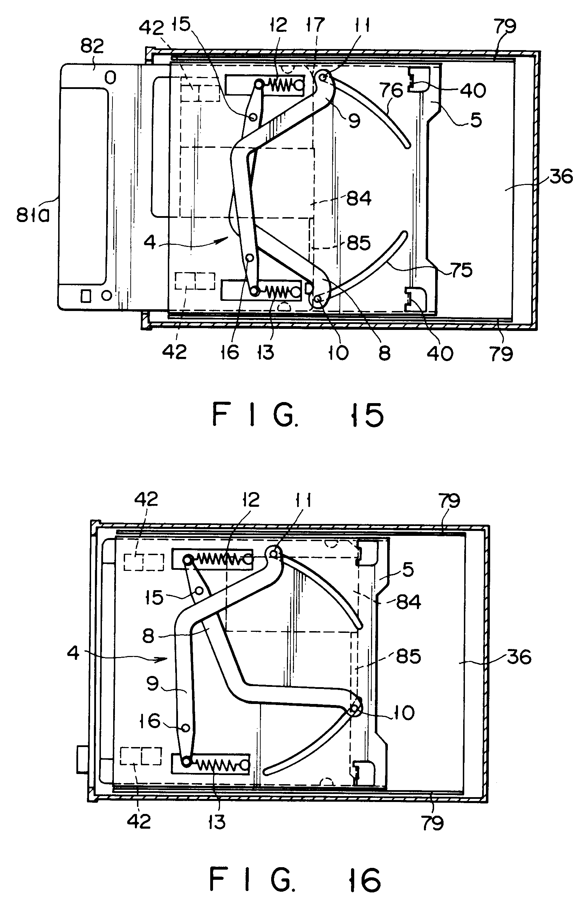

Fig. 15 is a plan view schematically showing a state in which part of the single-sided disk cartridge is in the apparatus,

Fig. 16 is a plan view schematically showing a state in which the whole single-sided disk cartridge is held in the apparatus,

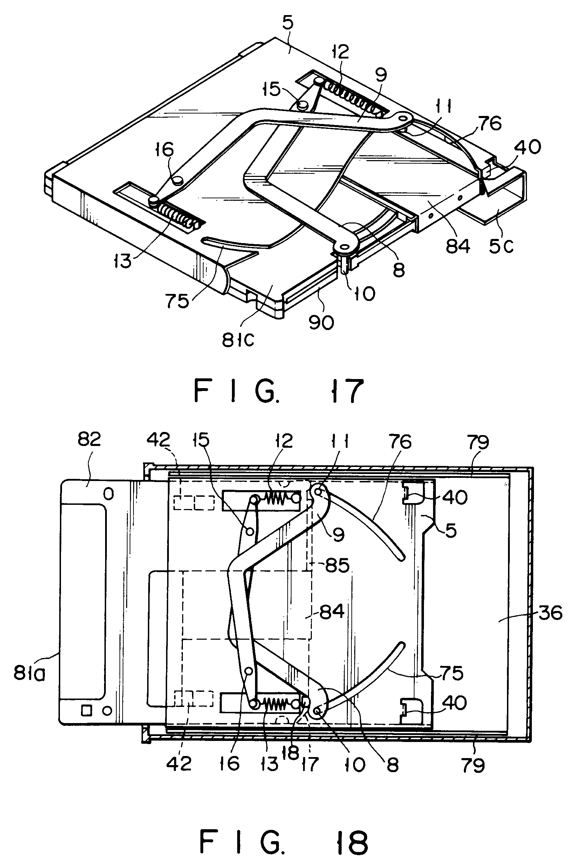

Fig. 17 is a perspective view showing the holder frame holding the whole single-sided disk cartridge, and

Fig. 18 is a plan view schematically showing a state in which the single-sided disk cartridge is inserted upside down in the apparatus.

An embodiment of the present invention will now be described in detail with reference to the accompanying drawings.

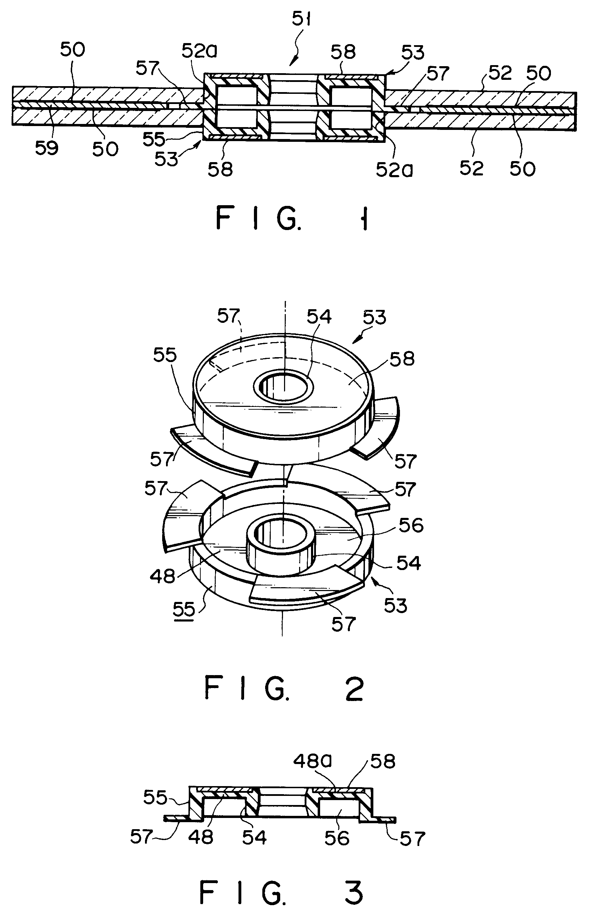

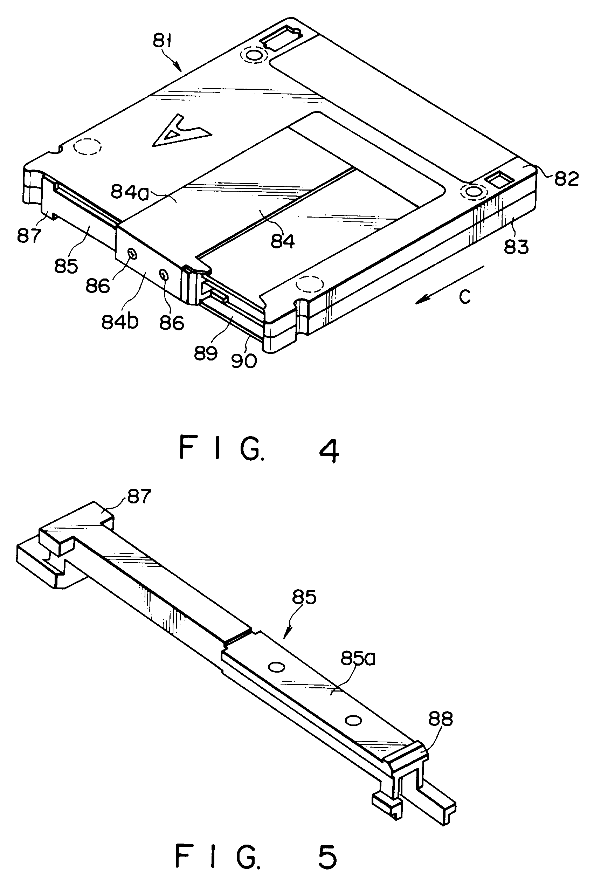

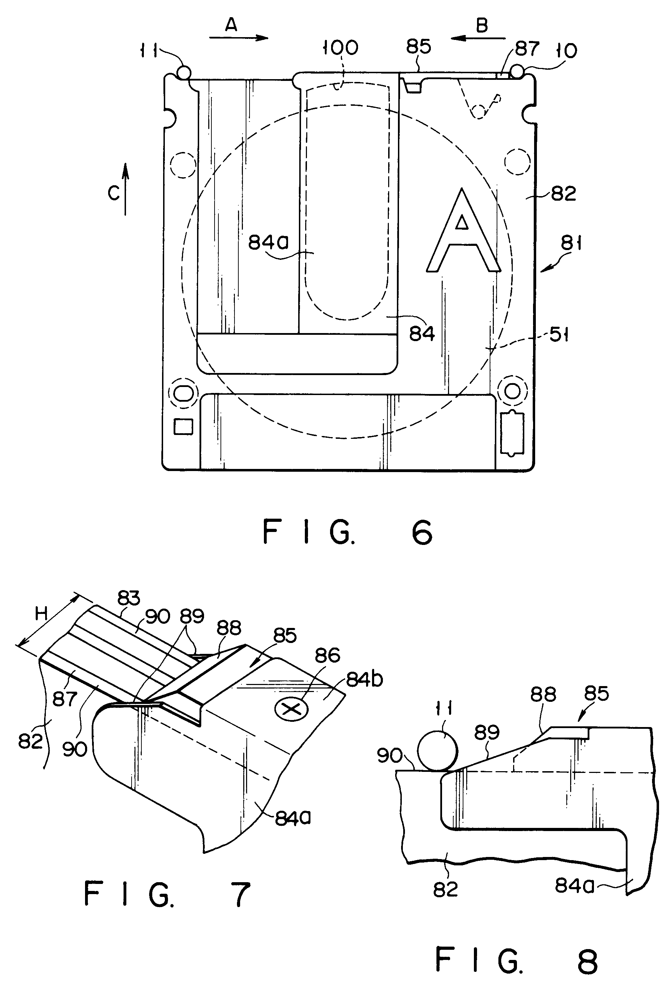

Figs. 1 to 3 show an optical disk for use as an information recording medium according to the embodiment of the present invention, especially a double-sided optical disk 51 capable of double-sided information recording and reproducing.

The optical disk 51 comprises two disk-shaped substrates 52 and a pair of hubs 53 for use as engagement portions. Each substrate 52 is formed of transparent resin, and has a concentric bore 52a in the center. A ring-shaped information recording layer 50 is formed coaxially on one surface of each substrate 52.

Each hub 53 includes an inner cylinder 54, a concentric outer cylinder 55 surrounding the cylinder 54, and a ring-shaped supporting wall 48 connecting the corresponding end portions of the cylinders. An annular space 56 between the inner and outer cylinders 54 and 55 is open on one end side and closed on the other end side, and the outer surface of the supporting wall 48 constitutes a supporting surface. The outer diameter of the outer cylinder 54 is substantially equal to the diameter of the bore 52a in each substrate 52. A plurality of collar portions (three in number in the present embodiment) 57 are formed intermittently or partially along the outer periphery of an open end portion of the outer cylinder 55, and extend in the circumferential direction. Fixed to the supporting surface 48a is a ring-shaped magnetic plate 58 which has a bore in the center.

In the present embodiment, the components of each hub 53 are integrally formed of synthetic resin. The magnetic plate 58, in particular, has a stepped portion (not shown) around the bore, and is formed integrally with the hub 53 by insert molding. The stepped portion bites into the resin lest the magnetic plate 58 be separated.

Each hub 53, constructed in this manner, is fixed to its corresponding substrate 52 in a manner such that its outer cylinder 55 is fitted into the through hole 52a of the substrate from the side of the recording layer 50 thereof, and its collar portions 57 are bonded to the recording-layer-side surface of the substrate by means of an adhesive agent. As shown in Fig. 1, the optical disk 51 is formed by pasting the two substrates 52, having the hubs 53 bonded thereto, with a spacer 59 sandwiched between them. In doing this, the substrates 52 are joined together with the two hubs 53 deviated from each other lest the collar portions 57 of the hubs overlap one another. Therefore, the spacer 59 need not be twice as thick as each collar portion 57, and must only be as thick as each portion 57, so that an increase of the mass of the disk can be reduced. Moreover, the capability of a spindle motor (not shown), for use as optical disk rotating means, to control variation in rotation can be improved, so that information can be reproduced from the optical disk 51 with less jittering.

The spacer 59 is in the form of a ring coaxial with the optical disk 51. The outer diameter of the spacer 59 is greater than that of each recording layer 50 which forms a recording and reproducing region, and the inner diameter of the spacer is smaller than that of the recording layer. Thus, each recording layer 50 is reinforced as a whole by the spacer 59, so that the life performance of the disk 51 can be improved. The spacer 59 is a sheet both sides of which are coated with adhesive mass, for example.

After each substrate 52 and its corresponding hub 53 are bonded together with their respective centers in alignment, the two substrates 52 are pasted on each other with the spacer 59 between them. Accordingly, the center of rotation of each substrate 52 can be easily aligned with that of the spindle motor for driving the optical disk 51. Since the collar portions 57 are sandwiched between the two substrates 52, moreover, the hubs 53 can never be disengaged from the disk 51 even if the bond portions between the collar portions 57 and the substrates 52 peel off. In removing the optical disk 51 from a turntable, for use as disk supporting means of an optical disk apparatus mentioned later, therefore, the hubs 53 can be prevented from coming off and remaining on the turntable.

Referring now to Figs. 4 to 8, a disk cartridge containing the aforementioned double-sided optical disk 51 will be described.

The cartridge 81 includes first and second symmetrical cartridge halves 82 and 83, which are connected face to face to each other. Each of the first and second halves 82 and 83 has a window 100 through which the optical disk 51 in the cartridge 81 is exposed to the outside, and which is opened and closed by means of a shutter 84 attached to the cartridge. The window 100 extends close to front end face of the cartridge 81 from the central portion of its corresponding cartridge half, along the direction C of insertion of the cartridge into the disk apparatus. When the shutter 84 is moved aside to open the window 100, the hubs 53 and the substrates 52 of the optical disk 51 are partially exposed. The shutter 84, which is formed by bending a metal plate in the shape of a U, includes a pair of plate portions 84a, individually facing the respective surfaces of the first and second halves 82 and 83, and a connecting portion 84b extending between the respective leading ends of the plate portions. A guide groove 87, which extends in the direction perpendicular to the cartridge insertion direction C, is formed on a front end face 90 of the cartridge 81 on the leading end side with respect to the insertion direction. A slider 85 of Teflon-based resin is fitted in the guide groove 87, and can slide in the perpendicular direction (direction of arrow A or B in Fig. 6), guided by the groove 87. The connecting portion 84b of the shutter 84 is fixed to the slider 85 by means of screws 86, and the shutter slides together with the slider, thereby opening or closing the windows 100. The slider 85 is urged in the direction of arrow A by means of a spring (not shown), and the shutter 84 is normally kept in a closing position shown in Fig. 6.

As shown in Figs. 4 and 5, the slider 85 is elongated in its sliding direction. An open-close pin engaging portion 87 is formed on one end side of the slider 85. One of paired open-close pins 10 and 11 of a loading mechanism (mentioned later) of the optical disk apparatus abuts against the engaging portion 87. When the windows 100 are closed by the shutter 84, the pin engaging portion 87 is situated on one end side of of the cartridge 81 with respect to the sliding direction. The intermediate portion of the slider 85 constitutes a flat mounting portion 85a to which the connecting portion 84b of the shutter 84 is fixed. An inclined portion 88 is formed at the other end of the slider 85. The open-close pin 10 or 11 runs onto the taper portion 88. Figs. 7 and 8 show the arrangement of the inclined portion 88 in detail. The inclined portion 88 has a width substantially equal to the width H of the front end face 90 of the cartridge 81, and is inclined at a predetermined angle to the front end face. At least part of each plate portion 84a of the shutter 84 extends on each side face of the inclined portion 88, and an inclined portion 89 is formed on each extending portion. Each inclined portion 89 is inclined at an angle narrower than that of the inclined portion 88 to the front end face 90, and its slanting surface crosses a side edge of the front end face 90 of the cartridge 81 and the slanting surface of the inclined portion 88, as viewed at right angles to the plate portion 84a.

The following is a description of open-close operation for the shutter 84 of the cartridge 81 constructed in this manner.

When the cartridge 81, with its exposure windows 100 closed by the shutter 84, is first inserted into the optical disk apparatus, as mentioned later, the open-close pins 10 and 11 move from the opposite ends of the front end face 90 of the cartridge 81 toward the center, along the front end face (or sliding surface for the slider 85). The one pin 10 abuts against the pin engaging portion 87 of the slider 85 at one end side of the front end face 90 of the cartridge 81, and moves toward the other end side of the cartridge (in the direction of arrow B in Fig. 6) while pushing the slider. Thereupon, the shutter 84 also moves in the direction of arrow B, thereby allowing the window 100 to open. The other pin 11 moves in the direction of arrow A, from the other end of the front end face 90 toward the one end side thereof. As it moves in this manner, the pin 11 first engages and runs onto the inclined portions 89 of the slider 85, then engages and runs onto the inclined portion 88 of the slider 85, and moves further toward the one end side. Thus, the other open-close pin 11 is not concerned in the open-close operation for the shutter 84.

In the process of finally running onto the slider 85, the open-close pin 11 first engages the inclined portions 89 of the shutter 84 without directly engaging the inclined portion 88 of the slider 85. As mentioned before, the inclined portions 89 cross the front end face 90 of the cartridge 81 and the inclined portion 88 of the slider 85. When the pin 11 runs onto the slider 85, therefore, it can smoothly move without hitching at the boundaries between inclined portions 89 and the front end face 90 and between the inclined portions 88 and 89. Thus, the shutter open-close operation of the open-close pin 10, which operates in association with the pin 11, as mentioned later, can be smoothly performed without being interrupted in the middle. If the inclined portions 89 of the shutter 84 are omitted, the boundaries between the front end face 90 and the inclined portion 88 of the slider 85 should be worked to ensure smoother slopes. Practically, however, the smallest difference in surface level may cause the open-close pin 11 to hitch, thereby hindering the shutter open-close operation of the pin 10.

In the present embodiment, the inclined portion 88 of the slider 85 has substantially the same width as the front end face 90, so that the open-close pin 11 can securely run onto the slider 85 from the end face 90 without being disengaged from the inclined portion 88.

If the cartridge 81 is inserted upside down into the optical disk apparatus, the open-close pin 11 abuts against the open-close pin engaging portion 87 of the slider 85, and the open-close pin 10 runs onto the slider 85, so that the window 100 on the other side is opened.

Referring now to Figs. 9 to 18, the optical disk apparatus for recording and reproducing information on the optical disk 51 in the cartridge 81 with the aforementioned construction will be described.

As shown in Fig. 9, the optical disk apparatus 72 comprises a housing 30, and a loading slot 32 for the cartridge 81 is formed in the front face of the housing. As shown in Fig. 10, the housing 30 contains a first loading mechanism 73 for horizontally loading the cartridge 81 inserted through the loading slot 32, a second loading mechanism 74 for vertically loading the cartridge 81 loaded in a predetermined position by the mechanism 73, and a turntable 71 for supporting the optical disk 51 in the cartridge 81. The housing 30 further contains a motor (not shown) for rotating the turntable 71, an optical head 34 for applying light to the optical disk 51 in the cartridge 81 to record and reproduce information, etc. The following is a description of the first and second loading mechanisms 73 and 74 which are constructed in a manner different from the conventional case.

The first loading mechanism 73 comprises a holder frame 5 and a shutter operating mechanism 4 thereon. The frame 5, which is formed by bending a plate, includes a rectangular top plate 5a, a pair of side plates 5b extending downward from two opposite side edges of the top plate, and supporting portions 5c formed by inwardly bending the respective lower end portions of the side plates and facing the top plate in parallel relation. The frame 5 serves to hold and guide the cartridge 81, inserted through the loading slot 32, in the horizontal direction (insertion direction C). The distance between each supporting portion 5c and the top plate 5a is substantially equal to the thickness of the cartridge 81. A pair of leaf springs 42 are fixed to the inner surface of the top plate 5a, and the cartridge 81 inserted in the frame 5 is pressed against the supporting portions 5c by means of these springs.

The shutter operating mechanism 4 includes first and second rocking levers 8 and 9 which are substantially L-shaped. The first rocking lever 8 has a proximal end situated close to the left side edge (in Fig. 10) of the frame 5, and its proximal end portion is rockably supported on the upper surface of the frame by means of a pivot 15. Likewise, the second rocking lever 9 has a proximal end situated close to the right side edge of the frame 5, and its proximal end portion is rockably supported on the upper surface of the frame by means of a pivot 16. The open-close pins 10 and 11 are fixed to the distal ends of the rocking levers 8 and 9, respectively. Tension springs 12 and 13 are stretched between the proximal end of the lever 8 and the frame 5 and between the proximal end of the lever 9 and the frame. The springs 12 and 13 extend in the cartridge insertion direction C, and arranged in openings which are formed individually at the opposite side edge portions of the upper surface of the frame 5, with respect to the direction perpendicular to the cartridge insertion direction. Thus, the paired rocking levers 8 and 9 are urged in opposite directions by means of the springs 12 and 13, respectively.

Two arcuate guide slits 75 and 76 are formed in the frame 5 so as to be symmetrical with respect to the cartridge insertion direction C. More specifically, the guide slit 75 has a starting end situated close to the right side edge of the frame 5, and a terminal end situated substantially in the central portion of the frame and ahead of the starting end, with respect to the insertion direction C. The slit 75 is in the form of a circular arc around the pivot 15 of the first rocking lever 8. The guide slit 76 has a starting end situated close to the left side edge of the frame 5, and a terminal end situated substantially in the central portion of the frame and ahead of the starting end, with respect to the insertion direction C. The slit 76 is in the form of a circular arc around the pivot 16 of the second rocking lever 9. The open-close pin 10, which is fixed to the distal end of the first rocking lever 8, projects into the frame 5 through the guide slit 75, and moves in the slit 75 as the lever 8 rocks. Likewise, the open-close pin 11, which is fixed to the distal end of the second rocking lever 9, projects into the frame 5 through the guide slit 76, and moves in the slit 76 as the lever 9 rocks. Normally, the first and second rocking levers 8 and 9 are urged by the springs 12 and 13, respectively, so that the pins 10 and 11 are held against the starting ends of the slits 75 and 76, respectively. The pin 10 is long enough to cover the distance from the top plate 5a of the frame 5 to the position near its corresponding supporting portion 5c, while the pin 11, which protrudes from the top plate substantially to the middle of the thickness of the frame, is about half as long as the pin 10.

The following is a description of the second loading mechanism 74.

Two guide pins 77 and 78 protrude from each of the paired side plates 5b which are arranged in the direction perpendicular to the insertion direction C of the cartridge 81. The optical disk apparatus 72 further comprises a supporting frame 36 on which the motor, the optical head 34, etc. are mounted. The frame 36 includes a pair of facing side plates 79 which are arranged spaced in the direction perpendicular to the cartridge insertion direction C. The plates 79 face their corresponding side plates 5b of the frame 5. Each side plate 79 has two vertical slits 61 and 62 corresponding to the guide pins 78 and 77, respectively. The frame 5 is movable in the vertical direction, guided by the pins 78 and 77 passed through the slits 61 and 62, respectively. When the insertion of the cartridge 81 in the frame 5 (state of Fig. 12) is detected by means of sensing means (not shown), the frame 5 is driven by means of drive means (not shown) and moved in the vertical direction from an up position to a down position.

The turntable 71 is arranged on the supporting frame 36, and is situated under the holder frame 5. The turntable 71 includes a magnet 71a for magnetically attracting the magnetic plate 58 on one of the hubs 53 of the optical disk 51, and a spindle shaft 71b to be inserted into the inner cylinder 54 of the hub 53. The moment the cartridge 81 is horizontally loaded by means of the first loading mechanism 73, the shutter 84 is slid aside. Then, the cartridge 81 is moved to its down position by means of the second loading mechanism 74. Thereupon, the optical disk 51 in the cartridge 81 held in the frame 5 is supported on the turntable 71 through one of the exposure windows 100 which is opened as the shutter 84 is removed. As the spindle 71b is passed through the inner cylinder 54, the optical disk 51 is aligned with the turntable 71, and the magnetic plate 58 is attracted and fixed to the turntable by means of the magnet 71a. Thereafter, the turntable 71 is rotated by means of the motor (not shown), whereby the optical disk 51 is rotated.

In taking out the cartridge 81, an eject button 38 (see Fig. 9) is depressed. Thereupon, the second and first loading mechanisms 74 and 73 operate reversely following the aforesaid steps of procedure. Thus, the shutter 84 of the cartridge 81 is put on, and the cartridge is unloaded so that it can be removed from the optical disk apparatus 72 through the loading slot 32.

The operation of the shutter operating mechanism 4 of the first loading mechanism 73 will now be described further in detail.

When the cartridge 81 is inserted into the optical disk apparatus 72 through the loading slot 32, the front end face 90 of the cartridge abuts against the open-close pins 10 and 11, as shown in Fig. 11. As the cartridge 81 continues to be inserted, the pins 10 and 11 are pushed in the insertion direction C by the front end face 90, resisting the urging forces of the springs 12 and 13. As a result, the first and second rocking levers 8 and 9 are rocked around the pivots 15 and 16, respectively, so that the open-close pins 10 and 11 are moved on the front end face 90 of the cartridge 81 in the directions of arrow B and A (see Fig. 6), respectively, to approach each other, while being guided by the guide slits 75 and 76, respectively. Then, the pin 10 presses the slider 85 to slide the shutter 84 aside, while the pin 11 moves past the inclined portions 89 and 88 and runs onto the connecting portion 84b, as shown in Figs. 12 and 13. When the cartridge 81 is inserted so that its front end face 90 engages stoppers 40 of the frame 5, the shutter 84 is put aside to open the window 100 fully, and part of the optical disk 51 in the cartridge is exposed to the outside.

When the cartridge 81 is moved in the take-out direction, moreover, the open-close pins 10 and 11 are returned to their respective initial positions shown in Fig. 11 by means of the urging forces of the springs 12 and 13, respectively.

The cartridge 81, which is one for the double-sided optical disk described before, can be loaded and have its shutter 84 moved aside to open the window 100 in the same manner as aforesaid even when it is inserted upside down, that is, with its side B upward, into the optical disk apparatus 72.

Fig. 14 shows a cartridge 81a which contains a single-sided optical disk 51a. This single-sided disk cartridge 81a has exposure windows and a shutter 84 identical with those of the aforementioned double-sided disk cartridge. An inclined portion 17 and recesses 18 for preventing wrong insertion of the cartridge 81 is formed on that side of the front end portion of the cartridge 81a which is situated opposite to the side of the pin engaging portion 87 of the slider 85. Naturally, the cartridge 81a is thinner than the cartridge 81 for the double-sided optical disk. Since other portions of the cartridge 81a are constructed in the same manner as those of the cartridge 81, a detailed description of the arrangement of those portions is omitted.

When the cartridge 81a is inserted with its right side upward into the optical disk apparatus 72, as shown in Fig. 15, the open-close pin 10 abuts against the pin engaging portion 87 of the slider 85. As in the case where the double-sided disk cartridge 81 is inserted, the shutter operating mechanism 4 is actuated when it is pushed by the front end face 90 of the cartridge 81a, and puts the shutter 84 aside to open the window, as shown in Figs. 16 and 17. Since the pin 11 is shorter than the pin 10, as mentioned before, it cannot engage the wrong insertion preventive inclined portion 17 and the upper surface of the cartridge 81a. Even though the cartridge 81a is inserted, therefore, the pin 11 is kept in its initial position without moving.

The cartridge 81a is pressed against the supporting portions 5c, which are situated opposite to the top plate 5a of the frame 5 fitted with the rocking levers 8 and 9, by means of the leaf springs 42 which are fixed to the inner surface of the top plate. The open-close pin 11 has a length such that it does not engage the cartridge 81a when the cartridge is inserted. For example, the pin 11 is shorter than the pin 10 by a margin equivalent to the difference between the respective thicknesses of the double-sided disk cartridge 81 and the single-sided disk cartridge 81a.

When the cartridge 81a is inserted with its right side downward into the optical disk apparatus 72, as shown in Fig. 18, the open-close pin 10 is caught by the wrong insertion preventive inclined portion 17, so that the first rocking lever 8 is prevented from rocking. Thus, the cartridge 81a is prevented from being inserted deeper, that is, reversed cartridge loading is prevented. Even if the pin 10 is undesirably released from the inclined portion 17, it is caught in the recess 18, so that wrong insertion of the cartridge 81a can be securely prevented.

According to the arrangement described herein, the shutter 84 of each cartridge can be operated smoothly and securely despite the difference in thickness between the cartridges 81 and 81a, which contain the optical disks for double- and single-sided recording and retrieval, respectively. Thus, the recording and reproducing operations can be easily performed with respect to the optical disks of different types.

**Claims**

1. An information recording medium for recording and reproducing information when irradiated while being supported by means of supporting means for rotation, said recording medium comprising:

a pair of substrates (52) each having a recording region (50) for recording information and fixed together facing each other; and

an engagement portion (53) attached to the substrates, for engaging the supporting means (71);

characterized in that:

said engagement portion (53) includes a projection (57) fixed to at least one of the substrates (52) and clamped between the substrates.

2. An information recording medium according to claim 1, characterized in that each of said substrates (52) is in the form of a disk having a concentric bore (52a) in a central portion of the substrate, said engagement portion (53) includes a pair of substantially cylindrical hubs, each of said hubs being fitted in the bore of the substrate corresponding thereto, and said projection (57) protrudes from the outer circumferential surface of each hub.

3. An information recording medium according to claim 2, characterized in that each of said hubs (53) includes an outer cylinder (55) having an outer diameter substantially equal to the diameter of the bore (52a) of the substrate (52), and a plurality of collar portions (57) protruding radially outward from the outer circumferential surface of one end portion of the outer cylinder, with respect to the axial direction thereof, and constituting the projection, the collar portions being spaced in the circumferential direction of the outer cylinder, the outer cylinder being passed through the bore from the side of a first surface of the substrate and projecting from a second surface of the substrate, the collar portions being fixed to the first surface.

4. An information recording medium according to claim 3, characterized in that said substrates (52) are pasted on each other in a manner such that the respective first surfaces thereof face each other and the collar portions (57) of one of the hubs (53) are situated with circumferential deviations from the collar portions of the other hub.

5. An information recording medium according to claim 4, characterized in that said recording region includes a ring-shaped information recording layer (50) formed on the first surface of the substrate (52) so as to be coaxial with the substrate, and characterized by further comprising a ring-shaped spacer (59) sandwiched between the respective first surfaces of the substrates (52), the spacer being arranged coaxially with the substrates and having an outer diameter greater than that of each recording layer and an inner diameter smaller than that of each recording layer.

6. An information recording medium according to claim 5, characterized in that each of said collar portions (57) is as thick as the spacer.

7. An information recording medium according to claim 4, characterized in that each of said hubs (53) includes an inner cylinder (54) situated coaxially with the outer cylinder (55), for aligning the substrate with the supporting means (71), a ring-shaped supporting wall (48) connecting the inner and outer cylinders and situated on the second surface side of the substrate, and a ring-shaped magnetic plate (58) fixed on the supporting wall.

8. An information recording medium for reproducing information while being supported by means of supporting means, said recording medium comprising:

a pair of substrates (52) having a recording region (50) for recording information and fixed together facing each other; and

an engagement portion (53) attached to the substrates, for engaging the supporting means (71); characterized in that:

said engagement portion (53) includes a projection (57) fixed to at least one of the substrates (52) and clamped between the substrates.

F I G.   1

F I G.   2

F I G.   3

FIG. 4

FIG. 5

FIG. 6

FIG. 7

FIG. 8

F I G. 9

F I G. 10

F I G.  11

F I G.  12

F I G.  13

F I G.  14

F I G. 15

F I G. 16

F I G. 17

F I G. 18